Europäisches Patentamt

European Patent Office

Office européen des brevets

(19)

(11) Veröffentlichungsnummer: **0 354 384**

**A1**

(12) **EUROPÄISCHE PATENTANMELDUNG**

(21) Anmeldenummer: 89113052.8

(22) Anmeldetag: 15.07.89

(51) Int. Cl.⁴: **B60S 1/32**

(30) Priorität: 06.08.88 DE 3826800

(43) Veröffentlichungstag der Anmeldung:
**14.02.90 Patentblatt 90/07**

(84) Benannte Vertragsstaaten:
**ES FR GB IT SE**

(71) Anmelder: **SWF Auto-Electric GmbH**
**Stuttgarter Strasse 119 Postfach 135**
**D-7120 Bietigheim-Bissingen(DE)**

(72) Erfinder: **Egner-Walter, Bruno**
**Käferflugstrasse 43**
**D-7100 Heilbronn(DE)**
Erfinder: **Hehl, Thomas**
**Kleinsachsenheimer Strasse 47**
**D-7120 Bietigheim-Bissingen(DE)**
Erfinder: **Schmid, Eckhardt**
**Heilbronner Strasse 62**
**D-7129 Brackenheim(DE)**

(54) **Scheibenwischer, insbesondere für Kraftfahrzeuge.**

(57) Es wird ein Scheibenwischer für Kraftfahrzeuge beschrieben, bei dem durch magnetische Mittel (30,31) die Anpreßkraftverteilung längs der Wischlippe (19) der Gummiwischleiste (18) beeinflußt wird. Damit kann insbesondere beim Wischen über gekrümmte Scheiben die Anpreßkraft vom mittleren Bereich auf den Endbereich des Wischblattes verlagert werden.

Fig. 1

EP 0 354 384 A1

## Scheibenwischer, insbesondere für Kraftfahrzeuge

Die Erfindung bezieht sich auf einen Scheibenwischer, insbesondere für Kraftfahrzeuge gemäß den Merkmalen des Oberbegriffs des Anspruchs 1.

Bei den heute überwiegend für moderne Kraftfahrzeuge hergestellten Scheibenwischern besteht das Wischblatt aus einem Tragbügelsystem mit einem Hauptbügel und wenigstens zwei Krallenbügeln, über die eine mit Federschienen versteifte Wischleiste aus einem gummielastischen Material geführt wird. Der Hauptbügel dieses Tragbügelsystems ist am Ende eines Wischarms gelenkig aufgehängt, wobei dieser Wischarm mit einer bestimmten Kraft gegen die zu reinigende Scheibe gedrückt wird. Diese vom Wischarm in den Hauptbügel eingeleitete Kraft wird über das Tragbügelsystem und die Federschiene auf die Wischlippe übertragen, die folglich während des Wischbetriebes mit einer bestimmten Anpreßkraft gegen die zu reinigende Scheibe gedrückt wird. Im Interesse einer guten Wischwirkung wird dabei eine möglichst gleichmäßige Verteilung der Anpreßkraft angestrebt. Dies ist verhältnismäßig leicht erreichbar, wenn das Wischblatt über einen ebenen Scheibenabschnitt bewegt wird. Bewegt sich aber das Wischblatt über einen gekrümmten Scheibenabschnitt, reicht meist die Anpreßkraft an dem vom Wischarm nicht überdeckten äußeren Ende des Wischblattes für eine einwandfreie Wischwirkung nicht aus. Zur Lösung dieses Problems hat man Versuche unternommen, die Anpreßkraft in diesem äußeren Wischblattbereich durch zusätzliche, nur bereichsweise wirkende Mittel zu beeinflussen. Vorstellbar sind beispielsweise Lösungen, bei denen durch zusätzliche Federmittel die Anpreßkraft im äußersten Wischblattbereich erhöht wird. Eine solche Lösung ist jedoch verhältnismäßig teuer, insbesondere weil die Montage einer solchen zusätzlichen Feder schwierig ist. Nachteilig ist außerdem, daß über solche Federelemente oft auch die Anpreßkraftverteilung eines auf einer ebenen Scheibe aufliegenden Wischblattes ungünstig beeinflußt wird.

Der vorliegenden Erfindung liegt daher die Aufgabe zugrunde, durch möglichst einfache und kostengünstig montierbare Mittel die Anpreßkraftverteilung bei einem solchen Wischblatt den Anforderungen entsprechend zu beeinflussen.

Insbesondere soll also ein Wischblatt geschaffen werden, bei dem auch bei stark gewölbten Scheiben im äußeren Bereich eine ausreichende Anpreßkraft erzielt wird.

Diese Aufgabe wird erfindungsgemäß mit den kennzeichnenden Merkmalen des Anspruchs 1 gelöst.

Die Erfindung basiert dabei auf der Überlegung, daß mit magnetischen Mitteln auf einfache Weise die Anpreßkraftverteilung in dem erforderlichen Maße geändert werden kann, weil die Magnetkraft bei kleiner werdender Entfernung zwischen den beiden magnetische wirkenden Teilen rasch zunimmt. Durch geeignete Anordnung und Auswahl der magnetischen Mittel kann man erreichen, daß die Anpreßkraftverteilung bei einem auf einer ebenen Scheibe aufliegenden Wischblatt nicht wesentlich beeinflußt, bei einem über einen gekrümmten Scheibenbereich wischenden Wischblatt aber im gewünschten Sinne sehr stark beeinflußt wird.

Der Grundgedanke der vorliegenden Erfindung kann auf unterschiedliche Weise realisiert werden. Beispielsweise kann die Magnetkraft zwischen dem Wischarm und dem daran angelenkten Tragbügelsystem insgesamt wirken. Man könnte sich also vorstellen, daß man einen Permanentmagneten am Wischarm fixiert, der auf das darunterliegende, meist metallische Tragbügelsystem wirkt. Bei anderen Ausführungen wirkt die Magnetkraft zwischen einem übergeordneten Bügel, beispielsweise einem Haupt- oder Zwischenbügel und einem untergeordneten Bügel, nämlich dem Zwischenbügel bzw. dem Krallenbügel des Tragbügelsystems.

Als magnetisch wirkende Mittel kann man einen Permanentmagneten verwenden, der unmittelbar mit einem metallischen Bügelteil zusammenwirkt. Eine solche Lösung wird aus Kostengründen bevorzugt. Eine stärkere magnetische Wirkung erhält man aber bei Verwendung von zwei Permanentmagneten, wobei Lösungen bevorzugt werden, bei denen die Anordnung und Polarität dieser Permanentmagneten derart gewählt ist, daß eine anziehende Kraftwirkung erzielt wird.

Da die Magnetwirkung bei geringer werdendem Abstand zwischen den beiden Magneten rasch ansteigt, muß man dafür Sorge tragen, daß die beiden Magnete nicht in direkten Kontakt miteinander treten, weil in einem solchen Fall sehr hohe Rückstell- oder Lösekräfte erforderlich wären. Diese Problem kann durch Anschläge gelöst werden, die eine direkte Berührung der magnetisch wirkenden Elemente verhindern. Diese Anschläge, die im Interesse einer geringen Geräuschbildung aus einem weichelastischen Material hergestellt sein können, können unabhängig vom Magneten an einem Bügel fixiert werden. Bevorzugt werden aber Ausführungen, bei denen der Permanentmagnet mit einer Beschichtung aus einem nichtmagnetischen Material überzogen ist.

Die Erfindung wird nachstehend anhand der in der Zeichnung dargestellten Ausführungsbeispiele näher erläutert.

Es zeigen:

Fig. 1 eine Seitenansicht auf eine Wischblatthälfte,

Fig. 2 eine Teilansicht auf ein Wischblatt bei einem anderen Ausführungsbeispiel,

Fig. 3 eine Teilansicht ähnlich Fig. 2 bei einem dritten Ausführungsbeispiel und

Fig. 4 schematisch eine Ansicht auf ein Wischblatt und einen Wischarm.

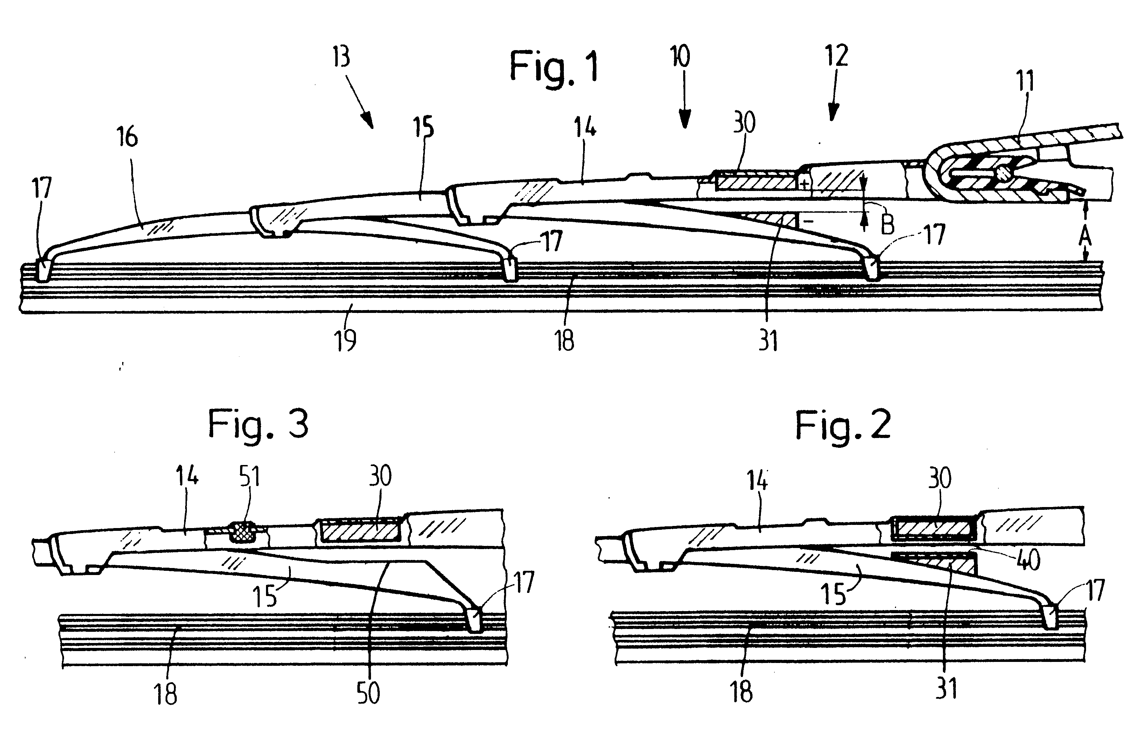

Zu dem insgesamt mit 10 bezeichneten Scheibenwischer gehört ein Wischarm 11, an dem schwenkbeweglich ein Wischblatt 12 aufgehängt ist, von dem in Fig. 1 nur die linke Hälfte dargestellt ist, die von dem Wischarm nicht überdeckt wird. Zu diesem Wischblatt 12 gehört ein Tragbügelsystem 13, das in dem gezeigten Ausführungsbeispiel aus einem Hauptbügel 14, einem daran schwenkbar aufgehängten Zwischenbügel 15 und einem daran schwenkbar aufgehängtem Krallenbügel 16 besteht. Der Krallenbügel 16 hat zwei Krallen 17 und der Zwischenbügel 15 eine weitere Kralle 17 zur Führung einer Gummiwischleiste 18, die in an sich bekannter Weise aufgebaut ist. Insbesondere weist diese Gummiwischleiste 18 zwei nicht näher dargestellten Federschienen auf, über die der über den Wischarm 11 und das Tragbügelsystem 13 zu den Krallen 17 eingeleitete Anpreßdruck möglichst gleichmäßig über die gesamte Länge der Wischleiste 18 verteilt wird. Die Wischlippe 19 der Wischleiste 18 wird also während des Wischbetriebes mit einer bestimmten Anpreßkraft gegen die zu reinigende Scheibe gedrückt. Ein derartiges Wischblatt wird serienmäßig hergestellt und weitere Erläuterungen dazu dürften sich deshalb erübrigen.

Wesentlich für die vorliegende Erfindung ist nun, daß die Anpreßkraftverteilung entlang der Wischlippe durch magnetische Mittel beeinflußbar ist. Bei dem Ausführungsbeispiel nach Fig. 1 ist dazu am Hauptbügel 14 ein Permanentmagnet 30 fixiert, der mit einem weiteren Permanentmagneten 31 zusammenwirkt, der am Rücken des Zwischenbügels 15 befestigt ist. Die beiden Permanentmagneten 30 und 31 sind dabei so angeordnet, daß die beiden sich gegenüberliegenden, entgegengesetzt gepolten Flächen einen solchen Abstand B voneinander haben, daß die durch die Magnetkraft hervorgerufene Änderung der Anpreßkraftverteilung vergleichsweise gering ist. Bewegt sich aber diese äußere Wischblatthälfte über einen gekrümmten Scheibenabschnitt, wird der Abstand A zwischen der Wischleiste 18 und dem Hauptbügel 14 und damit auch der Abstand B zwischen den beiden Permanentmagneten 30 und 31 kleiner, so daß sich die Anziehungskraft zwischen dem untergeordneten Zwischenbügel 15 und dem übergeordneten Hauptbügel 14 zunehmend erhöht. Auf den Zwischenbügel 15 wirkt damit ein Moment entgegen dem Uhrzeigersinn, was zur Folge hat, daß die Anpreßkraft, die über den äußeren Krallenbügel 16 auf die Wischleiste 18 und damit auf die Wischlippe 19 einwirkt, vergrößert wird. Es erfolgt also eine Verlagerung der Anpreßkraft vom mittleren Wischblattbereich nach außen, wodurch bei geeigneter Dimensionierung die Anpreßkraftverteilung auch beim Wischen gekrümmter Scheibenbereiche längs der Wischlippe wenigstens annähernd konstant gehalten werden kann.

Bei dem Ausführungsbeispiel nach Fig.1 wird also die Anpreßkraftverteilung längs der Wischlippe 19 durch die Magnete 30, 31 beeinflußt. Die Magnetkraft wirkt dabei zwischen dem Hauptbügel 14 und dem Zwischenbügel 15, also zwischen einem übergeordneten und einem untergeordnetem Bügel. Die beiden Permanentmagnete 30, 31 sind dabei derart angeordnet, daß eine anziehende Kraftwirkung erzielt wird, wobei bei einem sich über einen gekrümmten Scheibenabschnitt bewegenden Wischblatt 13 die Magnetkraft größer ist als bei einem sich über einen ebenen Scheibenabschnitt bewegenden Wischblatt. Die Permanentmagnete 30 und 31 sind dabei zwischen den Hauptbügel 14 und dem darunterliegenden Ende des Zwischenbügels 15 derart wirksam, daß der freie Endabschnitt des Zwischenbügels 15 bzw. der daran angelenkte Krallenbügel 16 beeinflußt wird. Es wird also die Anpreßkraft in dem vom Wischarm nicht überdeckten äußeren Wischblattbereich erhöht.

Das Ausführungsbeispiel nach Fig. 2 unterscheidet sich von dem nach Fig. 1 lediglich dadurch, daß die Permanentmagnete 30, 31 eine Beschichtung 40 tragen, die verhindern soll, daß die beiden Permanentmagnete 30, 31 sich direkt kontaktieren. In einem solchen Fall wäre nämlich nicht sichergestellt, daß beim Übergang auf einen wieder ebenen Scheibenbereich das Wischblatt wieder die in Fig. 1 dargestellte gestreckte Lage einnimmt. Dies liegt daran, daß bei sich berührenden Magneten eine hohe Rückstell- oder Lösekraft erforderlich ist.

Bei dem Ausführungsbeispiel nach Fig. 3 ist nur am übergeordneten Hauptbügel 14 ein Permanentmagnet 30 fixiert, der mit einem Metallteil 50 am untergeordneten Zwischenbügel 15 zusammenwirkt. Bei vielen Wischblättern sind zumindest die Zwischenbügel ohnehin aus einem magnetisch wirksamen Metallblech hergestellt. Bei Wischblättern mit einem Kunststoffzwischenbügel könnte man eine entsprechende Metalleinlage vorsehen. Fig. 3 zeigt, daß in einem Abschnitt 50 der Rücken des Zwischenbügels so gestaltet ist, daß sich eine große wirksame Fläche ergibt, die dem Permanentmagnet 30 gegenüberliegt.

Außerdem ist in Fig. 3 ein Anschlag 51 angedeutet, der aus einem weichelastischen Stoff hergestellt und zwischen den Seitenwangen des Hauptbügels 14 verankert ist. Durch diesen Anschlag 51 wird die Drehbeweglichkeit des Zwischenbügels 15 relativ zum Hauptbügel 14 derart eingeschränkt, daß der metallische Abschnitt 50 den Permanentmagneten 30 nicht direkt kontaktieren kann.

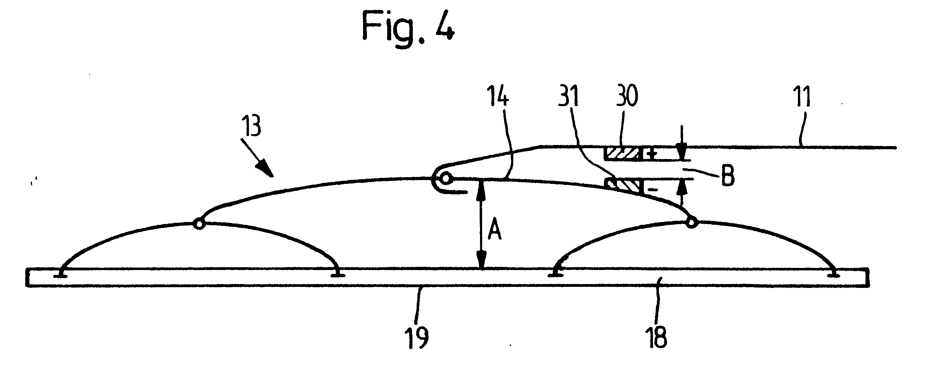

Fig. 4 zeigt schließlich schematisch eine Ausführung, bei der ein Permanentmagnet 30 am Wischarm 11 und ein anderer Permanentmagnet 31 am darunterliegenden Hauptbügel 14 angebracht ist. Die beiden Permanentmagnete 30 und 31 sind wiederum derart polarisiert, daß sie sich gegenseitig anziehen. Folglich wird beim Auflaufen des Wischblattes auf einen gekrümmten Scheibenbereich der Abstand A zwischen der Wischlippe 19 und dem Hauptbügel 14 und damit auch der Abstand B zwischen den beiden Permanentmagneten 30 und 31 verringert. Durch die dabei auftretende Erhöhung der Magnetkraft wird ein entgegen dem Uhrzeigersinn wirksames Moment auf den Hauptbügel 14 ausgeübt, so daß wiederum die Anpreßkraft in dem vom Wischarm 11 nicht überdeckten äußeren Wischblattbereich erhöht wird.

Die Permanentmagnete 30, 31 können an den Bügeln durch Verkleben oder durch einfache Kunststoffrastmittel fixiert werden. Dies bedeutet keinen wesentlichen Montageaufwand, so daß derartige Wischblätter kostengünstig herstellbar sind. Wegen ihrer auf die Scheibenkrümmung anpaßbaren Anpreßkraftverteilung zeigen derartige Wischblätter eine gegenüber bisher bekannten Scheibenwischern verbesserte Wischwirkung.

Nur der Vollständigkeit halber wird darauf hingewiesen, daß natürlich auch zwischen dem äußeren Ende des Zwischenbügels 15 und dem darunterliegenden Bereich des Krallenbügels 16 eine magnetische Kraftwirkung erzeugt werden könnte. Bei einer Ausführung nach Fig. 4 könnte auch eine Magnetkraftwirkung zwischen dem Hauptbügel und dem direkt daran aufgehängten Krallenbügel erzeugt werden. Schließlich sind auch Lösungen vorstellbar, bei denen sowohl Permanentmagnete zwischen dem Haupt- und dem Zwischenbügel als auch zwischen dem Zwischen- und dem Krallenbügel und gegebenenfalls sogar auch zwischen dem Wischarm und dem Hauptbügel vorgesehen werden. Es wird auch nicht für völlig ausgeschlossen gehalten, daß man anstelle eines Permanentmagneten einen elektrisch erregten Magneten verwendet, weil dann sogar eine Änderung der Anpreßkraftverteilung während des Wischvorgangs möglich wäre. Außerdem könnten natürlich die Magnete auch so angeordnet werden, daß eine abstoßende Kraftwirkung erzielt wird.

**Ansprüche**

1. Scheibenwischer, insbesondere für Kraftfahrzeuge, mit einem an einem Wischarm gelenkig aufgehängten Wischblatt mit einem Tragbügelsystem zur Führung einer Wischleiste, deren Wischlippe während des Wischbetriebes mit einer bestimmten Anpreßkraft gegen die zu reinigende Scheibe gedrückt wird, wobei die Anpreßkraftverteilung entlang der Wischlippe durch bereichsweise wirkende Mittel beeinflussbar ist, dadurch gekennzeichnet, daß die Mittel zur Beeinflussung der Anpreßkraftverteilung wenigstens einen Magneten (30,31) beinhalten und die Anpreßkraftverteilung durch Magnetkraft beeinflussbar ist.

2. Scheibenwischer nach Anspruch 1, dadurch gekennzeichnet, daß die Magnetkraft zwischen dem Wischarm (11) und dem daran angelenkten Tragbügelsystem (13) wirkt.

3. Scheibenwischer nach Anspruch 2, dadurch gekennzeichnet, daß das Tragbügelsystem (13) einen am Wischarm (11) aufgehängten Hauptbügel (14) sowie wenigstens einen an diesem Hauptbügel (14) angelenkten untergeordneten Bügel (15,16) aufweist und daß die Magnetkraft auf den Hauptbügel (14) wirkt.

3. Scheibenwischer nach Anspruch 1 oder 2, dadurch gekennzeichnet, daß das Tragbügelsystem (13) einen am Wischarm (11) aufgehängten Hauptbügel (14) sowie wenigstens einen an diesem Hauptbügel (14) angelenkten untergeordneten Bügel (15,16) aufweist und daß die Magnetkraft zwischen dem Wischarm (11) und/oder einem übergeordneten Bügel (14,15) einerseits und einem untergeordneten Bügel (15,16) andererseits wirkt.

4. Scheibenwischer nach Anspruch 3, dadurch gekennzeichnet, daß die Magnetkraft auf einen am Hauptbügel (14) angelenkten Zwischenbügel (15) wirkt, an dem wenigstens eine die Wischleiste (18) führender Krallenbügel (16) angelenkt ist.

5. Scheibenwischer nach Anspruch 3, dadurch gekennzeichnet, daß die Magnetkraft auf einen direkt oder über einen Zwischenbügel (15) am Hauptbügel (14) angelenkten Krallenbügel (16) wirkt.

6. Scheibenwischer nach Anspruch 3, dadurch gekennzeichnet, daß die Magnetkraft zwischen einem am Hauptbügel (14) angelenkten Zwischenbügel (15) und einem Krallenbügel (16) wirkt.

7. Scheibenwischer nach wenigstens einem der vorhergehenden Ansprüche, dadurch gekennzeichnet, daß ein Permanentmagnet (30) mit einem magnetisierbaren Werkstoff (50) zusammenwirkt.

8. Scheibenwischer nach wenigstens einem der Ansprüche 1 bis 6, dadurch gekennzeichnet, daß ein Permanentmagnet (30) am Wischarm (11) und/oder an einem übergeordneten Bügel (14,15) mit einem Permanentmagnet (31) am untergeordneten Bügel (15,16) zusammenwirkt.

9. Scheibenwischer nach Anspruch 8, dadurch gekennzeichnet, daß die Anordnung und Polarität der Permanentmagnete (30,31) derart gewählt ist, daß eine anziehende Kraftwirkung erzielt wird.

10. Scheibenwischer nach wenigstens einem der vorhergehenden Ansprüche, dadurch gekennzeichnet, daß der oder die Permanentmagnete (30,31) derart angeordnet sind, daß bei einem sich über einen gekrümmten Scheibenabschnitt bewegenden Wischblatt die Magnetkraft größer ist als bei einem sich über einen ebenen Scheibenabschnitt bewegenden Wischblatt.

11. Scheibenwischer nach Anspruch 10, dadurch gekennzeichnet, daß der oder die Permanentmagnete (30,31) derart angeordnet sind, daß die Anpreßkraft in dem vom Wischarm (11) nicht überdeckten äußeren Wischblattbereich erhöht wird.

12. Scheibenwischer nach wenigstens einem der vorhergehenden Ansprüche, dadurch gekennzeichnet, daß durch wenigstens einen Anschlag (51) eine direkte Berührung der magnetisch wirkenden Elemente (30,31;50) verhindert wird.

13. Scheibenwischern nach Anspruch 12, dadurch gekennzeichnet, daß der oder die Permanentmagnete (30,31) mit einer Beschichtung (40) aus einem nichtmagnetischen Material überzogen sind und daß durch diese als Anschlag (51) wirkende Beschichtung (40) eine direkte Berührung der Permanentmagnete (30,31) verhindert wird.

14. Scheibenwischer nach Anspruch 12 oder 13, dadurch gekennzeichnet, daß der Anschlag (51) aus einem weichelastischen Stoff hergestellt ist.

15. Scheibenwischer nach wenigstens einem der vorhergehenden Ansprüche, dadurch gekennzeichnet, daß der Permanentmagnet (30,31) durch Kleben oder einfache Kunststoffrastmittel am Wischarm (11) bzw. einem Bügel (14,15,16) befestigt ist.

Fig. 1

Fig. 2

Fig. 3

# Fig. 4

EP 0 354 384 A1

Europäisches Patentamt

**EUROPÄISCHER RECHERCHENBERICHT**

Nummer der Anmeldung

EP 89 11 3052

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-8 605 151 (SWF AUTO-ELECTRIC GMBH) <br> * Seite 4, Zeile 22 - Seite 5, Zeile 13; Figur 1 * <br> --- | 1,7-9, 12 | B 60 S 1/32 |
| X | AT-B- 252 748 (T. GROSSEGGER) <br> * Ansprüche 1,3 * <br> --- | 1,12 | |
| P,X | GB-A-2 205 485 (JAGUAR CARS LTD.) <br> * Seite 7, Zeile 16 - Seite 8, Zeile 7 * <br> --- | 1 | |
| X | GB-A- 983 306 (TRIDON MANUFACTURING LTD.) <br> * Seite 2, Zeile 106 - Seite 3, Zeile 3 * <br> --- | 1 | |
| P,X | DE-U-8 712 793 (R. BOSCH GMBH) <br> * Figuren 5,6; Seite 7, Zeile 6 - Seite 8, Zeile 24 * <br> ----- | 1 | |

| | | | RECHERCHIERTE SACHGEBIETE (Int. Cl.5) |
|---|---|---|---|
| | | | B 60 S |

Der vorliegende Recherchenbericht wurde für alle Patentansprüche erstellt

| Recherchenort | Abschlußdatum der Recherche | Prüfer |
|---|---|---|
| BERLIN | 05-10-1989 | STANDRING M A |